# FASCICULE DE BREVET EUROPEEN

(11) **EP 2 462 829 B1**
(45) Date de publication et mention de la délivrance du brevet: **29.10.2014**
(21) Numéro de dépôt: 11405362.2
(22) Date de dépôt: 29.11.2011
(51) Int. Cl.: A44C 5/10, F16B 21/18, A44C 5/14, G04B 37/14

(54) **Bracelet à maillons articulés et utilisation de ce bracelet**
Armband mit Gelenkgliedern, und Verwendung dieses Armbands
Bracelet with articulated links and use of said bracelet

(30) Priorité: 08.12.2010 EP 10405233; 22.12.2010 EP 10405244
(43) Date de publication de la demande: 13.06.2012
(73) Titulaire: Rolex S.A., 1211 Genève 26 (CH)
(72) Inventeur: Catheline, Adrien, 74520 Valleiry (FR)
(74) Mandataire: Moinas & Savoye SA

(56) Documents cités:
- EP-A1- 0 165 206
- EP-A1- 0 243 315
- EP-A1- 0 749 709
- EP-A1- 1 018 308

## Description

La présente invention se rapporte à un bracelet comprenant une pluralité d'éléments articulés dont les deux bords transversaux d'un élément sont enclavés dans les bords transversaux d'éléments adjacents respectifs, des passages transversaux traversant au moins partiellement les parties enclavées adjacentes respectives pour former des paliers dans lesquels des organes d'articulation sont engagés et sont maintenus aux deux extrémités desdits passages transversaux respectifs. Cette invention se rapporte également à une utilisation de ce bracelet.

L'agencement de joints annulaires de type O-ring sur des organes d'articulation tels que des axes reliant les maillons d'un bracelet, en particulier un bracelet de montre, est connu comme l'atteste le EP 0 165 206. Toutefois, dans ce document, les joints annulaires ne participent pas à l'articulation, mais uniquement à la fixation de goupilles d'articulation aux maillons assemblés et articulés entre eux par ces goupilles qui servent à la fois d'organes de liaison et d'articulation des maillons. Le but visé par ce document est de réaliser un assemblage simple, fiable et peu coûteux. La fabrication ne doit donc pas exiger une haute précision, le montage et le démontage doit être facile et le maintien de chaque goupille doit être fiable malgré les mouvements, chocs et vibrations auxquels le bracelet peut être soumis. Pour répondre à ce cahier des charges, les goupilles présentent une gorge dans laquelle est logé un joint d'étanchéité (comme par exemple un joint torique de type O-ring) à proximité de chacune de leurs extrémités situées à l'intérieur des mailles de bord.

Le FR 1 595 305 propose également l'emploi de joints toriques sur des chevilles destinées à être insérées dans des alésages. Selon ce document, il convient de pouvoir introduire aisément la cheville dans l'alésage alors que son extraction hors de l'alésage doit être rendue difficile. A cet effet, la partie d'extrémité de la cheville comporte une gorge présentant une surface de coincement inclinée contre laquelle prend appui un joint torique. La surface de coincement inclinée est orientée de façon à ce que, lors de l'assemblage de la cheville dans l'alésage, le joint torique soit poussé vers le fond de la gorge. De cette manière, l'introduction de la cheville dans son alésage est aisée alors que son retrait s'en trouve empêché par la surface inclinée qui comprime le joint entre la cheville et l'alésage.

L'un des problèmes persistants dans les dispositifs décrits ci-avant, comme dans tous les bracelets de ce genre connus à ce jour, réside dans le fait que les goupilles d'articulation s'usent avec le temps. Cette usure est provoquée par le frottement en présence de substances abrasives et/ou corrosives, comme la sueur ou l'eau de mer, qui pénètrent entre les surfaces de frottement des articulations et qui rongent progressivement les goupilles d'articulation et les surfaces des paliers. Cette usure engendre du jeu dans les articulations et ce jeu provoque à son tour l'usure des maillons.

Pour remédier à ce problème, le EP 0 243 315 propose d'interposer des paliers en rubis entre les maillons et les axes d'articulation. Le EP 2 057 914 suggère une autre solution qui consiste à ne permettre le frottement qu'entre des matériaux identifiés pour leur compatibilité à frotter l'un contre l'autre avec un minimum d'usure.

Un inconvénient connexe des bracelets formés d'éléments articulés réside dans le fait que les petits chocs entre les surfaces autorisés par le jeu entre ces éléments, provoque des cliquetis indésirables.

Le but de la présente invention vise à remédier, au moins en partie, aux inconvénients précités.

A cet effet, l'invention a tout d'abord pour objet un bracelet conforme à la revendication 1. Elle a également pour objet une utilisation de ce bracelet selon la revendication 11.

Le joint annulaire permet de réduire les frottements entre l'organe d'articulation et le palier. Il permet également de réduire les déplacements des éléments articulés autorisés par les jeux et de diminuer ainsi les bruits résultant des chocs entre les éléments articulés, de même que l'usure. En effet, comme ces joints sont en contact jointif avec la paroi du palier, ils engendrent un frottement gras qui permet de réduire, voire de supprimer, le jeu dans les articulations du bracelet, procurant ainsi une sensation qui améliore sensiblement la perception qualitative donnée par un tel bracelet.

Avantageusement, au moins deux joints annulaires coopèrent avec la paroi du palier pour ménager entre eux un espace étanche qui réserve un espace empêchant l'intrusion de substances abrasives et/ou corrosives dans le palier, et ce même lors de pression extérieure importante comme lors d'une plongée profonde.

De préférence, les joints annulaires sont disposés dans des gorges ménagées dans l'organe d'articulation.

Chaque gorge ménagée sur l'axe d'articulation peut disposer d'un chanfrein dont l'angle est adapté pour que le joint annulaire s'écrase et assure la tenue à la pression.

Les joints peuvent également être disposés dans des logements prévus dans le palier, par exemple sous la forme d'un lamage réalisé de part et d'autre du passage.

L'usure entre ces surfaces de frottement s'en trouve réduite et la durée de vie de ces pièces prolongée.

Avantageusement, de tels joints sont également montés de la même manière sur un ou plusieurs organes de liaison, par exemple sur deux tiges de liaison parallèles, supportant une maille intermédiaire entre deux mailles de bord. Comme dans le cas de l'articulation, l'agencement d'un seul joint, de préférence dans la partie médiane d'une ou plusieurs de ces tiges, peut se révéler suffisant pour supprimer tout jeu et donc tout choc entre ces mailles et participer ainsi à la réduction des bruits et à la sensation de qualité donnée par le bracelet.

D'autres avantages et spécificités apparaîtront à la lumière de la description détaillée qui va suivre et qui présente une forme d'exécution ainsi que des variantes de l'invention illustrées schématiquement et à titre d'exemple par les figures annexées dans lesquelles:

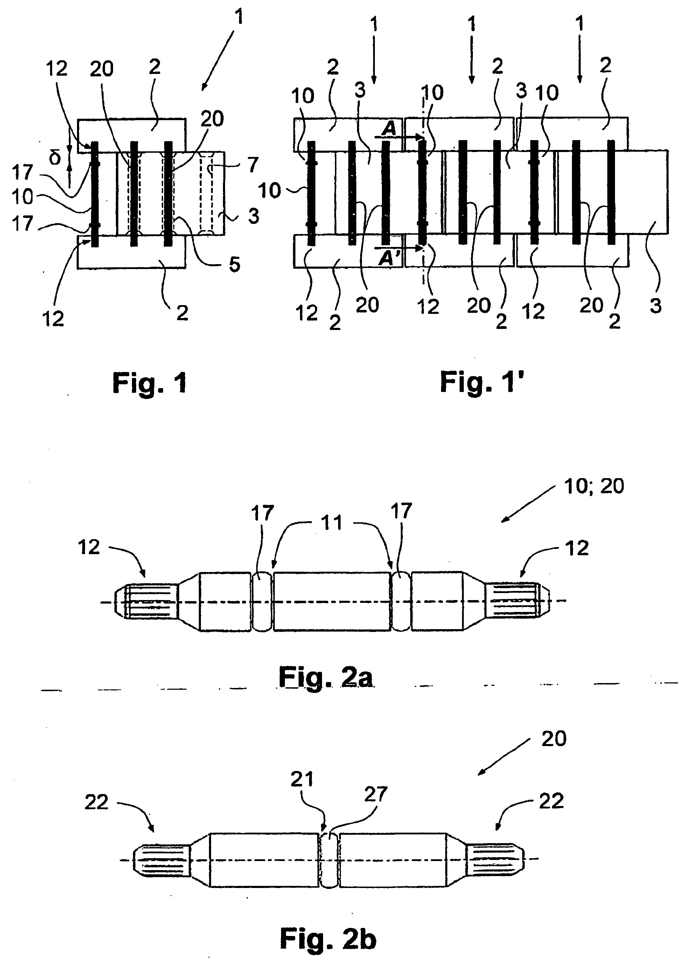

La figure 1 est une vue en plan d'un élément articulé selon une première forme d'exécution de l'invention.
La figure 1' est une vue en plan représentant l'assemblage de trois éléments articulés de la figure 1.
La figure 2a représente un organe d'articulation ou de liaison pourvu de joints toriques disposés selon l'invention.
La figure 2b représente un organe de liaison pourvu d'un joint torique médian.
Les figures 3a et 3b représentent deux autres formes d'exécution de l'invention dans des illustrations similaires à celle de la figure 1.
La figure 4 est une vue en perspective d'une variante de l'organe d'articulation illustré à la figure 2a.
Les figures 5 et 5' représentent des vues en perspective des éléments assemblés, respectivement séparés, constituant une variante de l'organe illustré à la figure 2a.
La figure 6 est une vue en coupe transversale selon la ligne A-A de la figure 1'.
La figure 7 est une vue en plan partielle d'une variante dans laquelle les éléments articulés du bracelet sont des éléments monoblocs.
La figure 8 est une vue en plan partielle d'une autre variante, dans laquelle le bracelet comporte cinq éléments articulés dans la largeur du bracelet.
La figure 9 est une vue en plan partielle d'une autre variante relative à la disposition des joints.
La figure 10 illustre une vue en plan de la liaison entre une extrémité du bracelet et un élément de fermoir.
La figure 11 illustre une vue en plan de la liaison entre une autre extrémité du bracelet et une carrure de boîte de montre.
La figure 1 représente un élément articulé 1 comportant deux mailles de bord 2 et une maille intermédiaire 3. Cette dernière est reliée aux mailles de bord 2 par au moins un organe de liaison 20, en l'occurrence deux organes de liaison parallèles qui sont maintenus par les mailles de bord et traversent chacun un passage 5 ménagé dans la maille intermédiaire 3.

L'assemblage d'une pluralité d'éléments articulés 1 pour former un bracelet est illustré à la figure 1' où chaque élément articulé 1 est relié à l'élément articulé adjacent par un organe d'articulation 10. Ce dernier est maintenu à ses extrémités 12 dans des logements ménagés dans les mailles de bord 2. Sa partie médiane traverse un palier 7 ménagé dans la maille intermédiaire 3 de l'élément articulé 1 adjacent.

Comme illustré à la figure 2a, l'organe d'articulation 10 comprend, dans cet exemple, deux gorges 11 recevant chacune un joint annulaire 17, typiquement un joint torique (aussi appelé O-ring). Ces joints 17 sont disposés dans la partie médiane de l'organe d'articulation située à l'intérieur du palier 7 et à proximité des mailles de bord 2 et sont en contact jointif avec la paroi du palier 7 pour ménager entre eux un espace étanche. Selon une variante non représentée mais similaire à la figure 2b, un seul joint annulaire 17 pourrait être utilisé afin de réduire le jeu entre les éléments articulés, ainsi que le frottement entre le palier 7 et l'organe d'articulation 10.

La figure 2b représente plus en détail l'organe de liaison 20 qui se présente sous la forme d'une tige venant se loger dans le passage 5 ménagé dans la maille intermédiaire 3. Cette dernière est alors maintenue entre les deux mailles de bord 2, dans des logements ménagés dans celles-ci. Les extrémités 22 de l'organe de liaison 20 sont fixées dans ces logements, notamment par chassage. Comme représenté dans cette figure, cet organe peut comprendre au moins une gorge 21 recevant un joint annulaire 27 qui est destiné à coopérer avec la paroi du passage 5 ménagé dans la maille intermédiaire. Avantageusement, cette variante permet d'obtenir un bracelet dont les bruits consécutifs aux chocs entre les mailles et les autres composants du bracelet sont totalement supprimés. Lorsque l'organe de liaison 20 comporte un seul joint 27, ce dernier sera de préférence disposé dans la partie médiane de la tige qui constitue cet organe.

De préférence, les gorges 11 et 21 seront identiques de même que les joints 17, 27. En variante, l'organe de liaison 20 peut également comporter deux gorges et deux joints toriques comme représentés à la figure 2a.

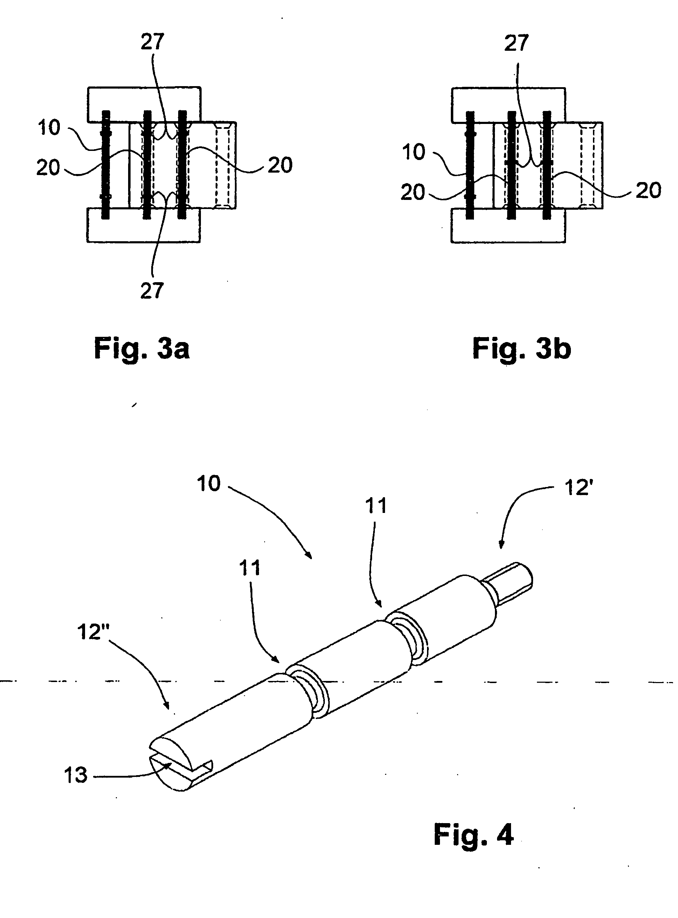

Les figures 3a et 3b montrent deux variantes de la forme d'exécution illustrée à la figure 1, dans lesquelles chaque organe de liaison 20 comporte deux joints toriques, respectivement un seul joint torique dans sa partie médiane.

Avantageusement, la configuration selon la figure 1 permet d'utiliser des organes de liaison de types connus et ne requiert donc aucune modification de ces derniers. La configuration illustrée à la figure 3a montre que les organes d'articulation 10 et les organes de liaison 20 du bracelet peuvent être identiques, ce qui simplifie la fabrication du bracelet et évite toute confusion possible entre ces deux organes. Les configurations des figures 3a et 3b permettent dans les deux cas de supprimer tout cliquetis du bracelet qui se traduit par une sensation d'amélioration de la qualité du bracelet.

En variante, la figure 4 représente un organe d'articulation 10, sans les joints 17, dont une des extrémités 12' est filetée alors que son extrémité opposée 12" est dotée d'une fente 13 pour un tournevis. L'extrémité filetée 12' de l'organe d'articulation est vissée dans un taraudage ménagé dans le logement de la maille de bord correspondante. Ainsi, cet organe d'articulation permet d'ajuster la longueur du bracelet en ajoutant ou en retirant un ou plusieurs éléments articulés 1 munis d'un tel organe d'articulation.

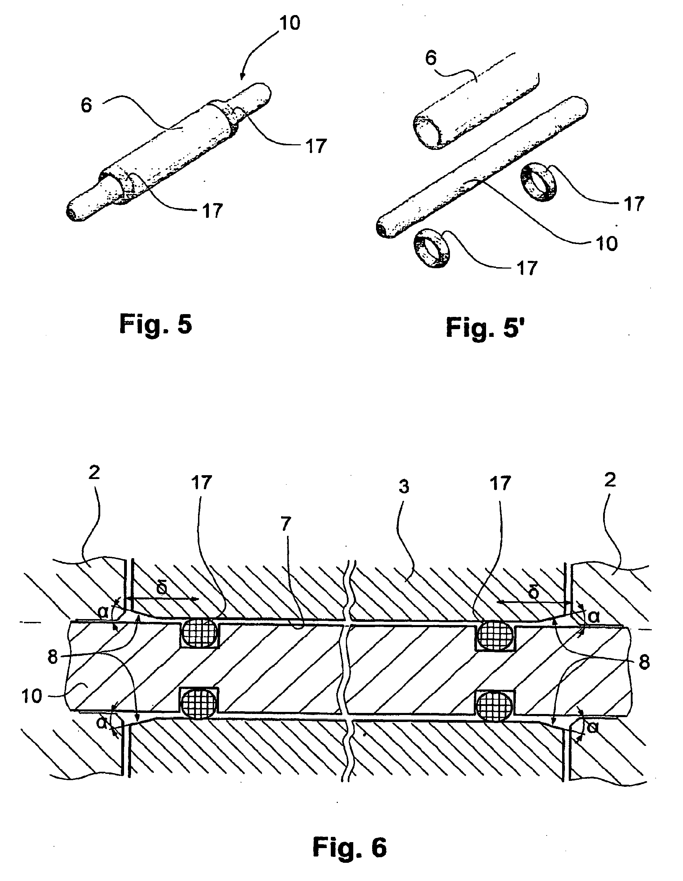

Dans un autre mode de réalisation, il est prévu de disposer un élément de palier rapporté 6 à l'intérieur de la maille intermédiaire 3. La figure 5 montre un exemple de cet élément de palier 6 monté sur l'organe d'articulation 10. Un tel élément de palier peut être constitué d'un tube en céramique frittée ou en un matériau composite formé d'un mélange de céramique et d'un métal ou encore d'un polymère (thermoplastique par exemple). Le matériau de cet élément doit permettre avant tout de réduire encore l'usure par frottement, conformément à l'enseignement de la demande de brevet EP 2 057 914. La figure 5' montre séparément les différents éléments de la figure 5, à savoir l'organe d'articulation 10, l'élément de palier tubulaire 6 et les deux joints 17 qui sont en appui contre les flancs latéraux du tube 6. Ainsi, ce tube se trouve avantageusement immobilisé dans la direction axiale de l'organe d'articulation. Dans ce cas, l'existence d'une gorge dans l'organe d'articulation 10 n'est plus indispensable, bien que cette gorge puisse être maintenue.

La figure 6 est une vue en coupe transversale selon la ligne A-A de la figure 1'. Selon une variante de l'invention, il est prévu qu'au moins un des bords du palier 7 soit pourvu d'un chanfrein 8 dont l'angle α est compris entre 10° et 30°, de préférence égal à 15°. La valeur de cet angle de même que la longueur de ce chanfrein est déterminée de façon à ce que les joints puissent s'introduire plus facilement et sans altération dans le palier de la maille intermédiaire lors de l'assemblage de l'organe d'articulation avec cette dernière. Lors de l'insertion de l'organe dans son palier, il importe en effet que l'écrasement du joint soit progressif pour ne pas le détériorer et pour l'aider à se maintenir dans sa gorge.

Comme illustré aux figures 1 et 6, les joints 17 sont disposés à l'intérieur de la maille intermédiaire 3, à une distance δ des mailles de bord 2 respectives, plus précisément des flancs intérieurs de ces mailles. Par conséquent, les joints annulaires sont disposés en retrait par rapport aux flancs de la maille intermédiaire de façon à pouvoir conserver une parfaite étanchéité de l'espace situé entre deux joints d'un même organe, même après une usure latérale de la maille intermédiaire. Typiquement, une distance δ de l'ordre de 1 à 2 mm confère un retrait suffisant pour garantir cette étanchéité sur une longue durée même lors d'une utilisation intensive.

Bien que décrites en référence à un organe d'articulation 10, on notera que les caractéristiques illustrées à la figure 6 pourraient également s'appliquer à un organe de liaison 20 dans le passage 5 de la maille intermédiaire 3.

La dimension des gorges 11, 21 est directement fonction du diamètre de la section des joints correspondants. La forme de ces gorges, représentée suivant une section carrée ou rectangulaire à la figure 6, pourrait toutefois avoir une section différente telle que celle d'une gorge à fond arrondi ou avec flancs inclinés. Dans tous les cas, il importe d'assurer une compression sur les diamètres intérieur et extérieur du joint de façon à pouvoir garantir l'efficacité de sa fonction première. Ainsi, la compression du joint sera par exemple de l'ordre de 15-40% et peut aller jusqu'à 50% sans altération du joint. L'allongement du périmètre du joint sera typiquement de l'ordre de 20% et peut atteindre des valeurs nettement plus élevées pour faire passer le joint autour du corps de l'axe.

L'allongement maximum du périmètre du joint lors du montage est contrôlé pour éviter une déformation trop importante lors de l'assemblage. La compression du joint est également contrôlée de manière à assurer l'étanchéité.

Plusieurs matériaux peuvent être employés pour les joints toriques, comme par exemple les fluoroélastomères pour leur bonne tenue aux agents chimiques, les polybutadiènes pour la bonne ténacité ou les polyuréthanes pour leur bonne résistance aux frottements. Les fluoroélastomères de type FKM, portant le nom commercial Viton^{®}, se sont révélés être particulièrement adaptés. En outre, ils peuvent être revêtus d'une couche d'un polymère de type PTFE.

Les organes d'articulation ou de liaison sont généralement en alliage métallique, par exemple en alliage à base de cobalt comme le Nivaflex^{®} ou le Phynox^{®}, ou encore en acier comme l'acier 316. Ils peuvent être revêtus d'une mince couche de carbone amorphe (couche DLC).

Les mailles intermédiaires peuvent être en acier, par exemple en acier 904L, en or ou en alliage d'or, en platine, en titane ou en céramique.

Des tests accélérés de vieillissement réalisés dans des conditions sévères ont permis de constater que l'usure du bracelet est significativement réduite. Cette réduction est de l'ordre de 50% à 85% suivant les matériaux utilisés. Par ailleurs, aucune rupture d'organe d'articulation ou de liaison n'est intervenue lors de ces tests. A titre de comparaison, une telle rupture intervient sur la moitié des bracelets standards soumis à un test de vieillissement aussi sévère. A l'issue de ces tests, l'étanchéité est toujours assurée et la sensation à l'articulation toujours présente.

La présence des joints sur les organes d'articulation permet d'empêcher l'introduction de toute particule abrasive et de toute substance corrosive, ce qui permet d'obtenir une diminution spectaculaire de l'usure de l'articulation. La présence de joints sur les organes de fixage, à savoir les organes situés entre les cornes de la carrure d'une montre, permet, quant à elle, de diminuer le bruit généré par les pièces normalement en contact direct à cet endroit.

Enfin, on comprendra que chaque élément articulé 1 n'est nullement limité à une seule maille intermédiaire 3 mais que plusieurs de ces mailles pourraient être disposées côte à côte entre les mailles de bord de chaque élément articulé 1.

La réalisation d'une zone étanche entre les joints toriques permet aussi d'ajouter un lubrifiant dans cette zone étanche et d'accroitre la longévité de l'articulation.

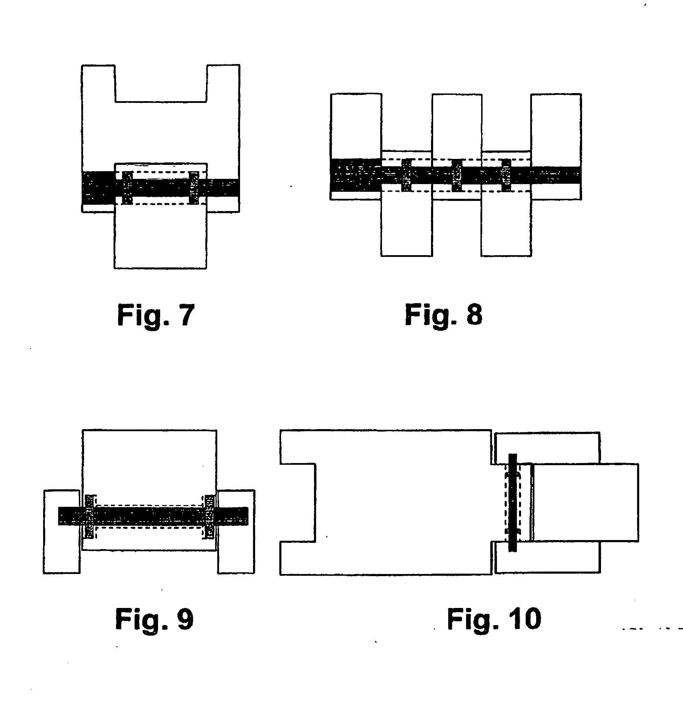

La variante de la figure 7 montre une variante du bracelet des figures 1 et 1', dans laquelle les éléments articulés 1 sont formés d'éléments monoblocs au lieu de mailles séparées.

La figure 8 illustre une autre variante dans laquelle les éléments articulés 1 sont formés de mailles séparées, reliées par l'organe d'articulation dont les deux extrémités sont fixées dans les deux mailles de bords.

La figure 9 illustre une autre variante dans laquelle les joints sont logés dans des logements prévus dans le palier, comme par exemple des lamages réalisés de part et d'autres du passage. Cette configuration permet également de garantir l'étanchéité, par écrasement radial et/ou latéral des joints suivant les dimensions du logement.

On comprendra également que l'élément articulé 1 n'est pas nécessairement un maillon, mais peut aussi être une lame de fermoir, une sécurité ou un couvercle de fermoir, un élément de fixage ou un élément solidaire de la carrure de la montre.

La figure 10 illustre une utilisation du bracelet avec un fermoir, notamment un fermoir du type dit à boucle déployante, fréquemment utilisé avec les bracelets pour montres. Dans cette variante, un bord transversal d'un élément du fermoir est conformé pour lui permettre de s'enclaver avec un bord d'un élément articulé 1 d'extrémité du bracelet.

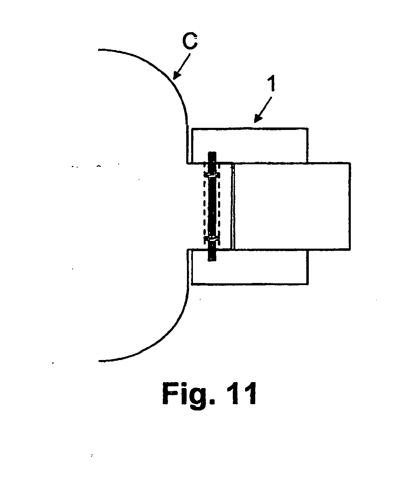

La figure 11 illustre la liaison de ce même bracelet dont un bord transversal de l'élément articulé d'une autre extrémité est enclavé sur une partie de la carrure C, conformée pour permettre à cette partie de s'enclaver avec le bord transversal de cette extrémité du bracelet.

Bien que les joints 17 et 27 décrits et représentés soient des joints toriques, il est spécifié que tout joint annulaire de section autre que circulaire peut être utilisé dans le cadre de la présente invention.

## Revendications

1. Bracelet comprenant une pluralité d'éléments articulés (1) dont les bords transversaux d'un élément articulé sont enclavés dans les bords transversaux d'éléments adjacents respectifs, des passages transversaux traversant au moins partiellement les parties enclavées adjacentes respectives pour former des paliers (7) dans lesquels des organes d'articulation (10) sont engagés et sont maintenus à au moins une extrémité desdits passages transversaux respectifs, **caractérisé en ce qu'**au moins un joint annulaire entoure la partie médiane d'au moins un organe d'articulation (10) située à l'intérieur du palier correspondant (7) et est en contact jointif avec la paroi de l'un desdits passages transversaux.

2. Bracelet selon la revendication 1 dans lequel au moins deux joints annulaires (17) sont disposés sur la partie de chacun desdits organes d'articulation (10) située à l'intérieur de l'un desdits paliers (7) pour ménager entre lesdits joints des espaces étanches.

3. Bracelet selon la revendication 2, dans lequel lesdits joints annulaires sont disposés à proximité des extrémités respectives desdits paliers (7).

4. Bracelet selon l'une des revendications précédentes, dans lequel lesdits organes d'articulation (10) comportent chacun au moins une gorge pour recevoir chacune au moins un joint annulaire (17).

5. Bracelet selon l'une des revendications précédentes, dans lequel au moins un desdits éléments articulés comporte deux mailles de bord (2) et au moins une maille intermédiaire (3).

6. Bracelet selon la revendication 5, dans lequel au moins une tige de liaison (20) est tenue par lesdites mailles de bord (2) et traverse au moins un passage (5) ménagé dans ladite maille intermédiaire (7).

7. Bracelet selon la revendication 6, **caractérisé en ce que** lesdites tiges de liaison (20) comprennent chacune au moins une gorge (21) recevant chacune un joint annulaire (27) qui coopère avec la paroi dudit passage (5).

8. Bracelet selon la revendication 7, dans lequel ledit joint annulaire (27) est disposé dans la partie médiane desdites tiges de liaison (20).

9. Bracelet selon la revendication 6, dans lequel lesdites tiges de liaison (20) comprennent chacune deux gorges (21) et les joints annulaires (27) agencés dans ces dernières sont disposés à proximité desdites mailles de bord (2) et sont en contact avec la paroi dudit passage (5).

10. Bracelet selon l'une des revendications 1 à 5, dans lequel au moins un palier (7) comporte un élément de palier tubulaire rapporté (6).

11. Utilisation du bracelet selon l'une des revendications précédentes comme bracelet de montre, dans lequel au moins un desdits bords transversaux enclavé dans un bord transversal desdits éléments articulés est ménagé dans un élément de fermoir de bracelet et/ou dans une carrure de boîte de montre pour permettre de relier ledit fermoir et/ou ladite carrure avec un desdits éléments articulés du bracelet.

12. Montre-bracelet, **caractérisée en ce qu'**elle comprend un bracelet selon l'une des revendications 1 à 10.

## Patentansprüche

1. Armband mit einer Anzahl von Gelenkelementen (1), bei denen die sich quer erstreckenden Ränder eines Gelenkelementes in die sich quer erstreckenden Ränder jeweils benachbarter Elemente eingepasst sind, wobei sich quer erstreckende Durchlässe wenigstens teilweise durch jeweils benachbarte eingepasste Bereiche erstrecken, um Lagerkörper (7) zu bilden, mit denen Gelenkorgane (10) in Eingriff und in wenigstens einem Ende der jeweiligen sich quer erstreckenden Durchlässe gehalten sind, **dadurch gekennzeichnet, dass** wenigstens eine ringartige Dichtung den Mittenbereich wenigstens eines Gelenkorgans (10) umgibt, der sich innenseitig des zugehörigen Lagerkörpers (7) befindet und in dichtendem Kontakt mit der Wand eines der sich quer erstreckenden Durchlässe ist.

2. Armband nach Anspruch 1, bei dem wenigstens zwei ringartige Dichtungen (17) in dem Bereich jedes Gelenkorgans (10) angeordnet sind, der auf der Innenseite eines der Lagerkörper (7) angeordnet ist, um zwischen den Dichtungen abgedichtete Räume auszubilden.

3. Armband nach Anspruch 2, bei dem die ringartigen Dichtungen im Bereich der jeweiligen Enden der Lagerkörper (7) angeordnet sind.

4. Armband nach einem der vorangehenden Ansprüche, bei dem die Gelenkorgane (10) jeweils wenigstens eine Vertiefung aufweisen, um jeweils eine der ringartigen Dichtungen (17) aufzunehmen.

5. Armband nach einem der vorangehenden Ansprüche, bei dem wenigstens eines der Gelenkelemente zwei Randglieder (2) und wenigstens ein Zwischenglied (3) aufweist.

6. Armband nach Anspruch 5, bei dem wenigstens ein Verbindungsstift (20) durch die Randglieder (2) gehalten ist und wenigstens einen Durchlass (5) quert, der in dem Zwischenglied (7) ausgebildet ist.

7. Armband nach Anspruch 6, **dadurch gekennzeichnet, dass** die Verbindungsstifte (20) jeweils wenigstens eine Vertiefung (21) aufweisen, die jeweils eine ringartige Dichtung (27) aufnehmen, die mit der Wand des Durchlasses (5) zusammenwirkt.

8. Armband nach Anspruch 7, bei dem die ringartige Dichtung (27) in dem Mittenbereich der Verbindungsstifte (20) angeordnet ist.

9. Armband nach Anspruch 6, bei dem die Verbindungsstifte (20) jeweils zwei Vertiefungen (21) aufweisen und die ringartigen Dichtungen (27), mit denen diese versehen sind, im Bereich der Randglieder (2) angeordnet sowie in Kontakt mit der Wand des Durchlasses (5) sind.

10. Armband nach einem der Ansprüche 1 bis 5, bei dem wenigstens ein Lagerkörper (7) ein angefügtes rohrartiges Lagerkörperelement (6) aufweist.

11. Verwendung des Armbandes nach einem der vorangehenden Ansprüche als Uhrenarmband, bei dem wenigstens ein sich quer erstreckender, in einem sich quer erstreckenden Rand der Gelenkelemente eingepasster Rand in einem Schließelement des Armbandes und/oder in einer Gehäuseschulter der Uhr ausgebildet ist, um das Verbinden der Schließe und/oder der Gehäuseschulter mit einem Gelenkelement des Armbandes zu gestatten.

12. Uhrenarmband, **dadurch gekennzeichnet, dass** es ein Armband nach einem der Ansprüche 1 bis 10 aufweist.

## Claims

1. Bracelet comprising a plurality of articulated elements (1) in which the transverse edges of an articulated element are interlocked in the transverse edges of respective adjacent elements, transverse passageways passing at least partially through the respective adjacent interlocked portions in order to form bearings (7) in which articulation members (10) are engaged and are held at at least one end of the said respective transverse passageways, **characterized in that** at least one annular seal surrounds the mid-portion of at least one articulation member (10) situated inside the corresponding bearing (7) and is in jointed contact with the wall of one of the said transverse passageways.

2. Bracelet according to Claim 1, in which at least two annular seals (17) are placed on the portion of each of the said articulation members (10) situated inside one of the said bearings (7) in order to arrange sealed spaces between the said seals.

3. Bracelet according to Claim 2, in which the said annular seals are placed close to the respective ends of the said bearings (7).

4. Bracelet according to one of the preceding claims, in which the said articulation members (10) each comprise at least one groove for each to receive at least one annular seal (17).

5. Bracelet according to one of the preceding claims, in which at least one of the said articulated elements comprises two edge links (2) and at least one intermediate link (3).

6. Bracelet according to Claim 5, in which at least one connecting rod (20) is held by the said edge links (2) and traverses at least one passageway (5) arranged in the said intermediate link (7).

7. Bracelet according to Claim 6, **characterized in that** the said connecting rods (20) each comprise at least one groove (21) each receiving an annular seal (27) which interacts with the wall of the said passageway (5).

8. Bracelet according to Claim 7, in which the said annular seal (27) is placed in the mid-portion of the said connecting rods (20).

9. Bracelet according to Claim 6, in which the said connecting rods (20) each comprise two grooves (21) and the annular seals (27) arranged in the latter are placed close to the said edge links (2) and are in contact with the wall of the said passageway (5).

10. Bracelet according to one of Claims 1 to 5, in which at least one bearing (7) comprises a fitted tubular bearing element (6).

11. Use of the bracelet according to one of the preceding claims as a watch bracelet, in which at least one of the said transverse edges interlocked in a transverse edge of the said articulated elements is arranged in a bracelet clasp element and/or in a middle of a watch case in order to make it possible to connect the said clasp and/or the said middle to one of the said articulated elements of the bracelet.

12. Wrist watch, **characterized in that** it comprises a bracelet according to one of Claims 1 to 10.
